# EUROPEAN PATENT APPLICATION

(11) **EP 4 682 733 A1**
(43) Date of publication of application: **21.01.2026**
(21) Application number: 23928079.5
(22) Date of filing: 23.03.2023
(51) Int. Cl.: G06F 16/176

(54) **DATA SHARING METHOD, DATA SHARING SYSTEM, ELECTRONIC DEVICE AND STORAGE MEDIUM**

(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: QIAN, Mu, Shanghai 200241 (CN)
(74) Representative: Gong, Jinping
(86) International application number: PCT/CN2023/083399
(87) International publication number: WO 2024/192767

(57) **Abstract**

This application discloses a data sharing method, a data sharing system, an electronic device, and a computer-readable storage medium. Based on the data sharing method, a server can acquire data features of private data from different data entities regarding the same target product and form a virtual dataset. Through this virtual dataset, data sharing under privacy protection is achieved, enabling each data entity to gain a general understanding, via the server, of the private data possessed by other data entities. Consequently, the solution of this application can reduce data barriers among different data entities while ensuring the data privacy of the private data.

## Description

### TECHNICAL FIELD

This application pertains to the technical field of data processing, and in particularly relates to a data sharing method, a data sharing system, an electronic device, and a computer-readable storage medium.

### BACKGROUND

In electric vehicles, the battery constitutes a critical component. Due to the complex mechanisms of the battery, multiple parties (for example, battery manufacturers, vehicle manufacturers, battery management systems, and vehicle owners) will affect the battery in different ways and have an impact on the state of the battery.

However, due to reasons such as data privacy, it is difficult for any one party to know which other parties are involved, and it is even more difficult to know what battery-related data each of the other parties possesses. This leads to a data barrier among the parties.

### SUMMARY

The purpose of the embodiments of this application is to provide a data sharing method, a data sharing system, an electronic device, and a computer-readable storage medium, so as to reduce data barriers among different parties of the same product while ensuring data privacy.

According to a first aspect, this application provides a data sharing method applied to a server, including:
acquiring data features of private data from at least one data entity within the lifecycle of a target product;
integrating the data features into a virtual dataset based on an association relationship between the data entity and the data features; and
sharing the virtual dataset.

In the technical solution of the embodiments of this application, regarding the private data obtained by a data entity for the target product, the server does not focus on the private data itself but on the data features of the private data. Understandably, the data features of the private data provide an identifiable objective summary of the private data without compromising the data privacy of the private data, and they can represent the private data to a certain extent. Moreover, the target product often involves multiple data entities throughout the lifecycle, and the data features of different private data related to the target product from any data entity can be stored in the virtual dataset of the server, which can achieve a closed-loop data system across the full lifecycle of the target product. To avoid confusion, the virtual dataset can also store the association relationship between the data entity and the data features to clarify the ownership of the private data corresponding to each data feature. Based on the above two considerations, the server can form a virtual dataset encompassing the full lifecycle of the target product. Through the virtual dataset, the server can achieve systematic and comprehensive sharing of the data features of the private data of each data entity, thereby reducing data barriers among different data entities while ensuring the data privacy of the private data of each data entity.

In some embodiments, the acquiring data features of private data from at least one data entity within the lifecycle of a target product includes:
receiving the private data from at least one data entity within the lifecycle of the target product; and
generating the data features based on the private data.

The data uploaded to the server may be the private data of a data entity regarding the target product. Upon receiving the private data, the server can perform a series of subsequent data processing steps to generate the corresponding data features. Through the preceding process, the data processing of the private data is deployed on the server, thereby fully leveraging the high computational power of the server.

In some embodiments, the generating the data features based on the private data includes:
performing standardized processing on the private data based on preset data feature standard information to obtain standardized data; and
generating the data features based on the standardized data.

To facilitate data sharing among parties through the server and unify different expressions of the same data object by various data entities, an operation of standardized processing may also be introduced. Through standardized processing, data from multiple parties adopts the same standard, which can significantly improve the efficiency of data exchange and collaboration among multiple parties.

In some embodiments, before the performing standardized processing on the private data based on preset data feature standard information to obtain standardized data, the data sharing method further includes:
performing data cleaning processing on the private data to obtain cleaned data; and
correspondingly, the performing standardized processing on the private data based on preset data feature standard information to obtain standardized data includes:
   performing standardized processing on the cleaned data based on the data feature standard information to obtain the standardized data.

To facilitate data sharing among parties and avoid interference from redundant information and/or invalid information on data sharing, the server can also introduce an operation of data cleaning processing. After the data cleaning processing, the volume of data requiring standardized processing decreases, thereby further improving the processing efficiency of standardized processing.

In some embodiments, the acquiring data features of private data from at least one data entity within the lifecycle of a target product includes:
receiving the data features of the private data from the at least one data entity within the lifecycle of the target product.

The data uploaded to the server may alternatively be the data features of the private data of a data entity regarding the target product. In this way, upon receiving the data features, the server can directly initiate subsequent operations to update the virtual dataset without expending time and resources on additional data processing. Through the preceding process, the data processing burden on the server is alleviated, enabling the server to maintain normal operation even in high-concurrency data scenarios.

In some embodiments, the data features include a summary and/or a data description of the private data.

Through the summary of the private data, verification of the integrity and reliability of the private data can be achieved, reducing instances of data fraud resulting from tampering with the private data to a certain extent; and through the data description of the private data, other data entities can conveniently understand the basic information of the private data, and other data entities can accurately determine, based on the data description, whether the private data can be utilized by the other data entities.

In some embodiments, the sharing the virtual dataset by the server includes:
receiving a data access request sent by a data access party; and
sending the virtual dataset to the data access party based on the data access request.

When there are too many data entities involved in the target product within the lifecycle, the data volume and update frequency of the virtual dataset also increase significantly. To reduce the burden, the server can adapt to the needs of the data entities, and send the virtual dataset to the data access party only upon receiving a data access request from the data access party, so as to reduce instances of overly frequent pushing of the virtual dataset to the same data entity.

In some embodiments, the data sharing method further includes:
receiving a data negotiation request from a data requester to acquire target private data;
determining a data owner of the target private data; and
sending the data negotiation request to the data owner.

Through data sharing based on data features, the server can already reduce data barriers among different data entities, enabling data entities to access the data features of the private data possessed by each other data entity, thereby gaining a general understanding of the private data possessed by each other data entity. As the server constitutes a reliable third party, when a data entity has a specific need to utilize the private data of another data entity, the data entity can initiate a data negotiation request to the data owner of the target private data through the server, thereby ensuring the reliability of the data negotiation process.

In some embodiments, the data sharing method further includes:
sending an authorization instruction to the data requester upon receiving the authorization instruction from the data owner.

As a reliable third party, the server can assist in data transfer during the data negotiation process among various data entities. Upon receiving an authorization instruction from the data owner, the server can forward the authorization instruction to the data requester. Thus, the data requester and the data owner have complete the negotiation, and the both parties can commence data interaction regarding the target private data based on the negotiated terms, so as to achieve the purpose of the data requester utilizing the target private data and realize data exchange and collaboration among different data entities.

In some embodiments, after the receiving the authorization instruction, the data sharing method further includes:
acquiring interaction information between the data owner and the data requester; and
writing the interaction information into a smart contract configured for value settlement between the data owner and the data requester.

The server can serve as a reliable third party in the data interaction process, recording various interaction information uploaded by the data owner and the data requester involved in the interaction, where the interaction information provides a true description of the data interaction process. The interaction information can be written into a smart contract. After the data interaction between the data owner and data requester involved in the interaction ends, the smart contract can conduct value settlement based on the true interaction information of both parties, which can make the value settlement more accurate. Through the value settlement, the data entity providing the data can gain certain benefits, which can stimulate the enthusiasm of data entities to provide high-quality data to a certain extent.

In some embodiments, after the receiving the authorization instruction, the data sharing method further includes:
determining negotiation result information between the data owner and the data requester based on the data negotiation request and the authorization instruction; and
writing the negotiation result information into a smart contract configured for value settlement between the data owner and the data requester.

The server can serve as a reliable third party in the data interaction process of the client, recording the negotiation result information between the data owner and the data requester before the data interaction begins, where the negotiation result information serves as constraints and expectations for the interaction process. The negotiation result information can be written into a smart contract, enabling the data owner and the data requester involved in the interaction to promptly obtain an estimated result of value settlement based on the smart contract before the data interaction starts and to perform value settlement promptly after the data interaction concludes. Through the value settlement, the data entity providing the data can gain certain benefits, which can stimulate the enthusiasm of data entities to provide high-quality data to a certain extent.

According to a second aspect, this application provides a data sharing method applied to a client, including:
acquiring data feature standard information of the server;
generating data features of private data of a target product based on the data feature standard information; and
uploading the data features to the server.

According to a third aspect, this application provides a data sharing system including a server and multiple clients, where the server implements the data sharing method according to the first aspect, and the client implements the data sharing method according to the second aspect.

According to a fourth aspect, this application provides an electronic device, where the electronic device includes a memory, a processor, and a computer program stored in the memory and executable on the processor, where the processor, when executing the computer program, implements the steps of the method according to the first aspect; or the processor, upon executing the computer program, implements the steps of the method according to the second aspect.

According to a fifth aspect, this application provides a computer-readable storage medium, where the computer-readable storage medium stores a computer program, where the computer program, when executed by a processor, implements the steps of the method according to the first aspect; or the computer program, when executed by a processor, implements the steps of the method according to the second aspect.

Understandably, the beneficial effects of the second to fifth aspects can refer to the relevant descriptions in the first aspect, and are not repeated herein.

The foregoing description is merely an overview of the technical solution of this application. For a better understanding of the technical means in this application so that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or the prior art. Apparently, the accompanying drawings in the following description show merely some embodiments of this application, and those of ordinary skill in the art may derive other drawings from these accompanying drawings without creative efforts.
FIG. 1 is a schematic architectural diagram of a data sharing system according to an embodiment of this application;
FIG. 2 is a schematic flowchart of a data sharing method according to an embodiment of this application;
FIG. 3 is a schematic flowchart of a data sharing method according to an embodiment of this application;
FIG. 4 is a schematic architectural diagram of a data sharing method in a practical application scenario according to an embodiment of this application; and
FIG. 5 is a schematic structural diagram of an electronic device according to an embodiment of this application.

### DESCRIPTION OF EMBODIMENTS

In the following description, for the purpose of illustration rather than limitation, specific details such as particular system structures and technologies are proposed to provide a thorough understanding of the embodiments of this application. However, those skilled in the art should understand that this application can also be implemented in other embodiments without these specific details. In other cases, detailed descriptions of well-known systems, devices, circuits, and methods are omitted to prevent unnecessary details from obscuring the description of this application.

It should be understood that, the term "include" as used in the specification and appended claims of this application indicates the presence of the described features, integers, steps, operations, elements, and/or components, without precluding the presence or addition of one or more other features, integers, steps, operations, elements, components, and/or collections thereof.

It should also be understood that the term "and/or" as used in the specification and appended claims of this application refers to any and all possible combinations of one or more of the associated listed items and includes these combinations.

As used in the specification and appended claims of this application, the term "if" may be interpreted contextually as "when" or "once" or "in response to determining" or "in response to detecting". Similarly, the phrases "if determined" or "if [the described condition or event] is detected" may be interpreted contextually as meaning "upon determining" or "in response to determining" or "upon detecting [the described condition or event]" or "in response to detecting [the described condition or event]".

Furthermore, in the description of the specification and appended claims of this application, the terms "first", "second," "third", and similar terms are used solely to distinguish descriptions and should not be construed as indicating or implying relative importance.

Reference to "one embodiment", "some embodiments", or the like described in the specification means that a particular feature, structure, or characteristic described in combination with the embodiment is included in one or more embodiments of this application. Therefore, expressions such as "in an embodiment", "in some embodiments", "in some other embodiments", and "in some different embodiments" appearing in different places in this specification do not necessarily indicate reference to a same embodiment, but mean "one or more but not all embodiments", unless otherwise specified in another way. The terms "include", "comprise", and "have", and variants thereof all mean "including but not limited to", unless otherwise specified in another way.

Throughout the full lifecycle of a product, from demand, planning, design, production, distribution, operation, use, maintenance, to recycling and disposal, multiple parties are often involved. These parties interact with the product in different ways, impacting the state of the product. For example, a battery, as a product with complex mechanisms, involves multiple distinct parties across the full lifecycle depending on the application domain. The battery applied to vehicles is used as an example. The parties involved may include, but are not limited to, battery manufacturers, vehicle manufacturers, charging station operators, and vehicle owners. The battery applied to mobile phones is used as an example. The parties involved may include, but are not limited to, battery manufacturers, mobile phone manufacturers, charging accessory manufacturers, mobile phone users, and shared power bank operators.

Due to reasons such as commercial interests, data privacy, or policy restrictions, any single party of the product finds difficulty in ascertaining the identities of other parties and, even more so, the product-related data possessed by each of these other parties, resulting in reluctance or inability among parties to directly exchange and share data regarding the product, thereby causing data barriers. The emergence of data barriers may make timely and accurate iterative optimization of the product challenging for parties, leading to a decline in the competitiveness of the product. The battery applied to vehicles is used as an example. When considering battery state modeling for the battery, if the modeling process relies solely on data from a single party, limitations from a single data source can result in a model struggling to accurately estimate and predict various parameters of the battery, such as state of health (State of health, SOH), state of charge (State of charge, SOC), and state of power (State of power, SOP). This consequence may affect subsequent safety testing, fault warning, health assessment, lifespan prediction, and optimal control of the battery, further restricting advanced commercial applications based on accurate battery state estimation, for example, insurance evaluation for second-hand electric vehicles. Over time, the development of batteries might be hindered, and currently deployed batteries might struggle to achieve optimization, leading to issues such as reduced range or shortened lifespan in currently deployed batteries, and potentially even causing accidents resulting in loss of life and property due to battery issues.

Based on the preceding considerations, to alleviate data barriers among different parties and promote data collaboration among them, the embodiments of this application propose a data sharing method, a data sharing system, an electronic device, and a storage medium, so as to achieve data sharing among parties by collecting and sharing data features of data obtained by various parties for the same type of product on the server.

Since the server collects and shares not the data itself obtained by each party, the data security and privacy of the data obtained by each party can be ensured. Since the server collects and shares data features derived from the data obtained by parties, the data features can provide an identifiable summary of the data obtained by parties, and can represent the data to a certain extent. In this way, the parties can gain a general understanding of the data possessed by other parties under the premise that data security and privacy are already ensured.

The embodiments of this application propose a data sharing method applied to a server. The server may be a single server; or the server may be a server cluster composed of multiple servers, meaning the server may be a distributed server. The embodiments of this application do not limit the type of the server. Considering that the data sharing method proposed in the embodiments of this application has certain requirements for data security and privacy protection, the credibility of the server may be taken into account during the establishment of the server. For example, the server may be a third-party server established by an organization or institution with public credibility; or the server may be a blockchain. The embodiments of this application do not limit thereto.

The embodiments of this application further propose a data sharing method applied to a client. The client may be a web client; or the client may be an independent client constructed to adapt to the server proposed earlier; or the client may be integrated into a client of a user data system. The embodiments of this application do not limit the type of the client.

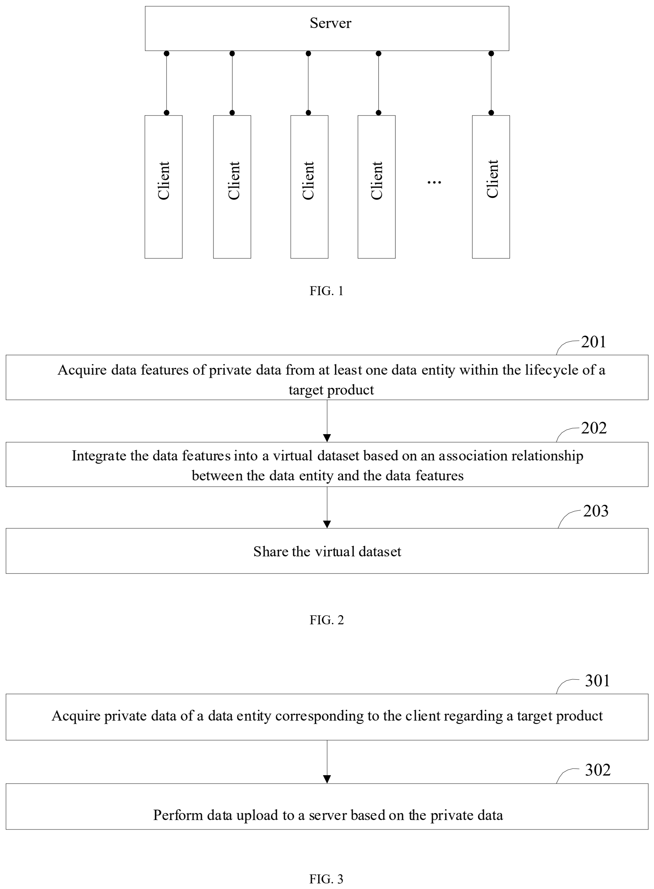

The embodiments of this application further provide a data sharing system, where the data sharing system includes a server and a client. Referring to FIG. 1, FIG. 1 is a schematic architectural diagram of the data sharing system. Each client can establish a communication connection with the server based on the needs of the client itself, thereby enabling direct interaction between each client and the server. Moreover, indirect interaction among clients can also be achieved through the server. The server in the data sharing system can execute the data sharing method applied to the server; and the client in the data sharing system can execute the data sharing method applied to the client. Details are not described herein again.

To facilitate understanding of the data sharing method applied to a server proposed in the embodiments of this application, the data sharing method is explained and described below through specific embodiments. Referring to FIG. 2, the data sharing method includes the following steps.

Step 201: Acquire data features of private data from at least one data entity within the lifecycle of a target product.

The target product, throughout the complete lifecycle of production, manufacturing, use, secondary processing, and/or research, might involve multiple data entities, each of which may generate private data related to the target product. The concepts involved in the above definitions are explained and described below.

The target product is a pre-designated specific type of product, and this type of product is designated to minimize data barriers surrounding the product as much as possible; in other words, the target product denotes the product currently under consideration for breaking down data barriers. As an example only, the target product may be a battery. The embodiments of this application do not limit the application domain of the battery.

A data entity refers to a party involved in the lifecycle of the target product, encompassing both direct parties and indirect parties. The battery applied to vehicles is used as an example. The direct parties include, but are not limited to, battery manufacturers, vehicle manufacturers, charging station operators, and vehicle owners, while indirect parties include, but are not limited to, research teams studying the battery as a scientific subject and battery service providers. Understandably, any individual, organization, or institution capable of generating data related to the battery (including directly related and indirectly related data) can be regarded as a data entity.

The data generated by a data entity regarding the target product, meaning the data related to the target product produced by the data entity, constitutes the private data of the data entity regarding the target product. Understandably, the term "private" in private data merely indicates that the data, obtained by the data entity regarding the target product, remains unpublicized widely and holds certain value. Generally, private data possesses unique data content, meaning the data content of private data possessed by different data entities regarding the target product typically varies; additionally, private data exhibits diverse data types, specifically related to the data entity providing the private data. The battery applied to vehicles is used as an example. The private data of a research team studying the battery as a scientific subject may be model data of the battery, the private data of a battery service provider may be service data of the battery, the private data generated by a vehicle owner may be usage data of the battery, and the private data generated by a battery manufacturer may be design data and/or production data of the battery. Details are not described herein again.

Since private data remains unpublicized widely and holds certain value, to ensure the data privacy and security of the private data, corresponding data features may be generated based on the private data. The data features may be generated by the server or may be generated by the client. The embodiments of this application do not limit thereto.

Understandably, the data features are generated based on the private data, making the data features an objective summary of the private data; further, based on the term "features", the data features are primarily derived from information unique to the private data (or exhibiting certain differences). Combining the above two points, the data features constitute an identifiable objective summary of the private data, and can uniquely represent the private data.

When the server has established a communication connection with the client, the server may acquire, through interaction with the client, the data features of the private data of the data entity corresponding to the client regarding the target product.

Step 202: Integrate the data features into a virtual dataset based on an association relationship between the data entity and the data features.

Considering that different data entities might interact with the target product at different stages of the lifecycle, the server may pre-create a virtual dataset, where the virtual dataset is initially empty. Whenever the server acquires the data features of private data from a certain data entity, it can add the currently acquired data features and the association relationship with the data entity to the virtual dataset. Since the data features constitute an identifiable objective summary of the private data, and can be used for uniquely representing the corresponding private data, the foregoing association relationship effectively expresses the relationship among the private data, the data entity possessing the private data, and the data features of the private data.

Understandably, as the server continues to operate, the server might sequentially acquire data features of different private data regarding the target product from multiple data entities, and continuously update the virtual dataset based on the order of acquisition time, so as to gradually enrich the virtual dataset. After a period, the server could form a virtual dataset encompassing the full lifecycle of the target product. The virtual dataset can be understood as a data catalog for the target product, not containing the private data itself but including the data features of the private data and the association relationship between the data features and the data entity.

Step 203: Share the virtual dataset.

The server may perform data sharing based on the virtual dataset. Specifically, the server may directly share the virtual dataset itself; and certainly, the server may alternatively consider sharing only a portion of the content within the virtual dataset, such as content from a specific time period. Details are not described herein again. It should be noted that the embodiments of this application do not limit the timing of sharing the data features. For example, the server may share data based on the virtual dataset immediately after acquiring the data features and updating the virtual dataset based on the data features; or may perform data sharing at a designated time based on the virtual dataset; or may perform data sharing in response to a demand from a data entity based on the virtual dataset. The embodiments of this application do not limit thereto.

Understandably, the data features constitute an identifiable objective summary of the private data, and can be used for uniquely representing the private data. On this basis, the virtual dataset includes not only data features the most recently received by the server but also data features previously received by the server, along with the association relationship between these data features and the data entity. Thus, based on the sharing of the virtual dataset by the server, each data entity can systematically and comprehensively access the data features of each piece of private data related to the target product through the client of the data entity, which enables each data entity to gain a preliminary general understanding of the private data possessed by other data entities.

In some embodiments, since the computational power of the server generally surpasses that of the client, and the server constitutes a reliable third party, the client can consider uploading the private data to the server. In such an application scenario, Step 201 may specifically manifest as: receiving the private data from the at least one data entity within the lifecycle of the target product; and generating the data features based on the private data. In other words, after the client obtains the private data of the data entity regarding the target product, the client may directly upload the private data to the server, and the server generates and shares the data features of the private data. This approach can reduce the processing burden on the client.

In some embodiments, considering that the server may establish communication connections with multiple clients, in scenarios with a large number of clients, concurrent data uploads might affect the processing efficiency of the server despite the strong computational power of the server; moreover, although the server constitutes a reliable third party, for data security considerations, the data entity might still prefer storing the private data locally on the client to minimize the possibility of data leakage to the greatest extent. In such cases, Step 201 may specifically manifest as: receiving the data features of the private data from the at least one data entity within the lifecycle of the target product. In other words, after the client obtains the private data of the data entity regarding the target product, the client first generates the data features based on the private data locally, then uploads only the data features to the server, so that the private data remains unknown to the server. This approach can alleviate the processing burden on the server during concurrent data uploads from multiple clients while ensuring the data privacy and security of each data entity.

In some embodiments, different data entities might interact with the target product at different stages of the lifecycle, leading to potentially different data expressions for the same data object by these data entities, specifically manifested as different data units or magnitudes. For example, regarding voltage description, some data entities might use volts as the unit for description, while others might use millivolts for description. This discrepancy might cause misunderstandings among data entities regarding the private data of other data entities, affecting subsequent data exchange and collaboration among data entities. Based on this, when the client uploads private data to the server and the server needs to generate the data features of the private data, an operation of data standardization may be considered on the server. Then, the step of generating the data features based on the private data by the server may include the following steps.

A1: Perform standardized processing on the private data based on preset data feature standard information to obtain standardized data.

The server may predefine unified data feature standard information. The data feature standard information specifies data standards such as expected data units and magnitudes for various data objects related to the target product during data sharing, with no limitation provided herein. Thus, upon receiving the private data, the server may perform standardized processing on the private data based on the data feature standard information, where the obtained result is standardized data. Understandably, the standardized data inevitably conforms to the data standards indicated by the data feature standard information. The target product being a battery applied to vehicles is used as an example. The data feature standard information may be set based on the unified standard extended from the national standard GBT 32960.3-2016-Technical Specification for Remote Service and Management System of Electric Vehicles. Details are not described herein again.

In some examples, the server may develop a standardized interface based on the preset data feature standard information. In this way, the server may directly invoke the standardized interface to process the received private data to obtain standardized data, which can improve the efficiency of standardized processing by the server to a certain extent.

A2: Generate the data features based on the standardized data.

After obtaining the standardized data, the server may generate the data features based on the standardized data rather than directly based on the private data; in other words, after generating the data features, the server proceeds with subsequent processing based on the standardized data.

Through data standardization processing, different expressions of the same data object by the data entities are unified. This can reduce instances of misunderstandings among data entities regarding the private data of other data entities, and promote data exchange and collaboration among data entities to a certain extent. Furthermore, the data standardization processing is implemented by the server, which has higher computational power compared to the clients, reducing the processing burden on the clients.

In some embodiments, the private data generated by a data entity regarding the target product might include invalid and/or redundant data. This might arise due to anomalies in the target product or anomalies during data collection. Such invalid and/or redundant data affects the quality and value of the private data while also impacting the efficiency of data processing. Based on this, when the client uploads private data to the server and the server needs to generate the data features of the private data, before Step A2, the server may first perform data cleaning processing on the received private data to obtain cleaned data. As an example only, the data cleaning processing includes, but is not limited to, filling (or removing) blank data, removing obviously anomalous data, and removing duplicate data, with no limitation provided herein.

Understandably, based on the data cleaning processing, Step A2 may be optimized as: performing standardized processing on the cleaned data based on preset data feature standard information to obtain standardized data. In other words, after the cleaned data is obtained, the object of standardized processing shifts from the private data to the cleaned data. Evidently, the data volume of the cleaned data is inevitably no greater than that of the original private data, which can improve the efficiency of standardized processing to a certain extent. Moreover, the resulting standardized data inevitably contains no invalid and/or redundant information, thereby improving data quality and value. Additionally, the data cleaning processing is implemented by the server, which has higher computational power compared to the client, reducing the processing burden on the clients.

In some embodiments, to conveniently verify the integrity and reliability of the private data and prevent data entities from privately tampering with the private data during data sharing through the server, the data features of the private data acquired by the server may include a summary of the private data.

The summary proposed in the embodiments of this application specifically refers to a fixed-length pseudorandom value obtained by processing the private data with a given summary algorithm. Understandably, for specific private data, provided that the private data remains untampered, the result obtained by processing the private data with the same summary algorithm at any time typically remains consistent; conversely, if the private data is tampered with, the results obtained by processing the private data before and after tampering with the same summary algorithm typically differ.

As an example only, the given summary algorithm may be secure hash algorithm (Secure Hash Algorithm, SHA), message digest algorithm (Message Digest Algorithm), or variants of any of the above algorithms. The embodiments of this application do not limit thereto.

In some embodiments, to facilitate each data entity to gain a general understanding of the private data held by other data entities, and to promote subsequent data exchange and collaboration among data entities, the data features of the private data acquired by the server may include a data description of the private data.

The data description proposed in the embodiments of this application specifically refers to attribute information of the private data, where an information type of the attribute information includes, but is not limited to, one or more of the following: data entity, data type, data size, data time range, data quality assessment, and data value assessment. Specifically, the data entity has been described earlier, referring to the individual, organization, or institution legally owning the private data; the data quality assessment refers to the evaluation result of the data quality of the private data, obtainable by a reliable data quality assessment institution evaluating the private data; and the data value assessment refers to the evaluation result of the data value of the private data, obtainable by a reliable data value assessment institution evaluating the private data.

For any data entity, the type of information that should be included in the data description obtained based on the data entity may be independently decided by the data entity; or the type may be decided through negotiation between the data entity and the server via the client of the data entity, with no limitation provided herein.

Considering that the type of information included in the data description obtained based on different data entities might vary, the server may predefine a unified data description format. Subsequently, the data description of each piece of private data obtained by the server can all conform to this data description format, which facilitates unified processing by the server and also makes it convenient for each data entity to access.

In some embodiments, as described earlier, the server may establish communication connections with multiple clients. Different data entities may interact with the server through the respective corresponding clients, enabling the server to share the virtual dataset. In one application scenario, to reduce the interaction burden between the server and the clients, Step 203 may specifically be implemented through the following process:
sending the virtual dataset to a data access party based on a data access request upon receiving the data access request from the data access party.

When no request is received, the server may remain in an interaction waiting state. Upon receiving a data access request initiated by a certain client, the server may confirm that the data entity corresponding to the client has a need to access the virtual dataset, where the client is the data access party. In such a case, the server may determine the necessity to share the virtual dataset with the data access party. Specifically, the server may determine, based on a sending address of the data access request, which specific client the data access party is and send the virtual dataset to the data access party, so that the data access party can display the virtual dataset on the display interface of the data access party for the data entity corresponding to the data access party to access the virtual dataset.

In other words, in this application scenario, the server does not proactively share the virtual dataset but can passively share the virtual dataset based on the needs of the data access party (that is, the needs of the data entity corresponding to the data access party). This can reduce cases of overly frequent pushing of the virtual dataset to the same client and can alleviate the interaction burden between the server and the client.

In another application scenario, to reduce cases in which the client remains unaware of updates to the virtual dataset, Step 203 may also specifically be implemented through the following process:
sending the virtual dataset to a data access party at a preset designated time point.

Before reaching the designated time point, the server may remain in an interaction waiting state. Upon reaching the designated time point, the server may send the latest virtual dataset at that point to the data access party, enabling the data entity to access the latest virtual dataset in a timely manner even if the data entity has not initiated a data access request through the client of the data entity. The data access party may be all clients; or the data access party may be the client corresponding to a data entity with certain requirements for the real-time nature of the virtual dataset, with no limitation provided herein. The designated time point may be set by the server; or the designated time point may be set by a data entity with certain requirements for the real-time nature of the virtual dataset through the corresponding client, for example, setting multiple designated time points based on a certain time interval, with no limitation provided herein.

In other words, in this application scenario, the server may proactively share the virtual dataset with the data access party at preset designated time points. Since there is typically a certain time interval between adjacent designated time points, this approach can reduce cases of overly frequent pushing of the virtual dataset to the same client, and can alleviate the interaction burden between the server and the client. Additionally, after an update to the virtual dataset, since the server may proactively share the virtual dataset at the designated time point without requiring the data access party to initiate a data access request, this approach can reduce cases in which the client remains unaware of updates to the virtual dataset.

In yet another application scenario, considering that a data entity might be interested only in certain specific data, Step 203 may also specifically be implemented through the following process:
sending the virtual dataset to a data access party when the currently received data features are data features of interest to the data access party.

Each data entity may inform the server, through the client of the data entity, of the specific data features of interest based on the needs of the data entity. When the data features currently acquired by the server meet the needs of a certain data entity, the client corresponding to the data entity may be identified as the data access party. The server may thus send the virtual dataset to the data access party, enabling the data entity corresponding to the data access party to promptly access the newly added content in the virtual dataset, that is, promptly access the data features currently acquired by the server and the correspondence between the data features and the private data.

In other words, in this application scenario, the server can achieve timely proactive sharing of the virtual dataset at targeted personalized sharing opportunities based on the needs of the data entity.

In some embodiments, direct communication connections are not established between clients; instead, indirect communication connections are established only through the server. To enable data exchange and collaboration among different data entities and to maximize the utilization of shared data, the data sharing method proposed in the embodiments of this application may further include the following steps.

B1: Receive a data negotiation request sent by a data requester.

Each client may access the data features of each piece of private data based on the data sharing performed by the server. Based on the earlier description, after each data entity accesses the data features of each piece of private data through the client of the data entity, the data entity gains a preliminary general understanding of the private data possessed by each other data entity. Each data entity may thus make a preliminary judgment on whether other data entities possess private data needed by the data entity. For any data entity, if the data entity determines, based on the data features of the private data already shared by the server, that certain private data among these is needed by the data entity, the data entity may initiate a data negotiation request through the client of the data entity to request the private data.

For distinction, in the embodiments of this application, the client initiating the data negotiation request is denoted as the data requester, and the private data requested by the data requester is denoted as the target private data.

B2: Determine a data owner of the target private data.

From a legal perspective, the target private data is not owned by the server. Since the virtual dataset resembles a data catalog for the target product and includes the data features of each piece of private data and the association relationship between the data features and the data entity, the server may determine the data owner of the target private data based on the virtual dataset, that is, the client corresponding to the data entity owning the target data.

B3: Send the data negotiation request to the data owner.

The server may serve as a bridge for data interaction, forwarding the data negotiation request sent by the data requester to the corresponding data owner, so that the data entity corresponding to the data owner can approve the data negotiation request.

Certainly, the data negotiation process between the data requester and the data owner may also proceed through other means. For example, independent of the server, the data requester and the data owner may negotiate directly offline, with no limitation provided herein on the negotiation process.

In some embodiments, regarding the data negotiation request initiated by the data requester, the data entity corresponding to the data owner may consider the data negotiation request and provide feedback based on the consideration result. The server might face the following two different scenarios.

First scenario: The data entity corresponding to the data owner agrees to the data negotiation request. In this scenario, the data owner may provide an authorization instruction. The authorization instruction may first be sent to the server, and then forwarded by the server to the data requester, informing the data entity corresponding to the data requester that the data entity corresponding to the data owner has agreed to the data negotiation request. Subsequently, the data requester and the data owner may proceed with data interaction regarding the target private data. In one example, the data requester and the data owner may specifically employ privacy computing technology for data interaction, thereby protecting the data security of each data entity.

Second scenario: The data entity corresponding to the data owner rejects the data negotiation request. In this scenario, the data owner may provide a rejection instruction. The rejection instruction may alternatively first be sent to the server, and then forwarded by the server to the data requester, informing the data entity corresponding to the data requester that the data entity corresponding to the data owner has rejected the data negotiation request.

Understandably, in practical application scenarios, a data entity might have data needs for multiple other data entities or may have multiple data needs for a single another data entity. Regardless of the needs of the data entity, the data entity may refer to the above process, initiating corresponding data negotiation requests to several other clients through the client of the data entity. In other words, when the data requester initiates a data negotiation request, there might be multiple corresponding data owners.

As an example only, the data negotiation request may include, but is not limited to, one or more of the following information: requested data, the purpose of the data, computations expected to be carried out based on the data, and a data pricing model. As a reliable third party, the server may record the data negotiation request, and use the recorded data negotiation request as one piece of evidence in case of subsequent data interaction disputes.

In some embodiments, after receiving an authorization instruction, the server may ascertain that the data requester and the data owner are about to commence data interaction regarding the target private data. Considering that private data holds certain value, the data interaction typically is not gratuitous. Based on this, the data sharing method may further include the following steps.

C1: Acquire interaction information between the data owner and the data requester.

During the data interaction process between the data owner and the data requester, although the specific results of the interaction are not uploaded to the server, the interaction information of the actual data interaction operations performed by both parties is uploaded to the server. The server may thus record all interaction information (including interaction operation record information and/or interaction operation summary information) involved in the full data interaction process between the data owner and the data requester. The recording may be in plaintext or may be non-plaintext (for example, the recording hash values). Understandably, since the server constitutes a reliable third party, the interaction information cannot be tampered with, repudiated, or forged.

C2: Write the interaction information into a smart contract configured for value settlement between the data owner and the data requester.

The server is pre-configured with a smart contract negotiated by the data owner and the data requester. To achieve accurate value settlement, the interaction information of the data owner and the data requester can be written into the smart contract, enabling the smart contract to be aware of each interaction operation performed during the data interaction process, thereby ascertaining the actual usage volume of the interacted data. After the data interaction concludes, the smart contract may be automatically triggered to perform value settlement, and the value settlement is typically realized through tokens or points, thereby achieving value transfer between the data entities participating in the interaction.

In some embodiments, after receiving an authorization instruction, the server may ascertain that the data requester and the data owner are about to commence data interaction. Considering that data holds certain value, the data interaction typically is not gratuitous. Based on this, the data sharing method may further include the following steps.

D1: Determine negotiation result information between the data owner and the data requester based on the data negotiation request and the authorization instruction.

As described earlier, the data negotiation request may include, but is not limited to, one or more of the following information: requested data, the purpose of the data, computations expected to be carried out based on the data, and a data pricing model. The authorization instruction indicates that the content of the data negotiation request has been confirmed by the data owner. Considering that most of the content in the data negotiation request pertains to expectations for the subsequent interaction process, the server may thus determine the negotiation result information between the data owner and the data requester.

D2: Write the negotiation result information into a smart contract configured for value settlement between the data owner and the data requester.

The server is pre-configured with a smart contract negotiated by the data owner and the data requester. Through the negotiation result information, the server may estimate the expected usage volume of the data to be interacted with during the data interaction process between the data owner and the data requester. Generally, the actual interaction process typically does not deviate significantly from the negotiation result information, so the negotiation result information may be written into the smart contract, enabling the smart contract to perform value estimation based on the expected usage volume of the data. After the interaction concludes, the smart contract may be automatically triggered to perform value settlement, and the value settlement is typically realized through tokens or points, thereby achieving value transfer between the data entities participating in the interaction.

In some embodiments, the server may support multiple transaction models, provided that the data requester and the data participant have negotiated and confirmed in advance. As an example only, the data pricing model supported by the server may include, but is not limited to, an automatic price matching model, a dynamic price adjustment model based on transaction records, and a custom model defined by the parties participating in the interaction, with no limitation provided herein. When the data negotiation request carries a data pricing model, the server may configure the data pricing model of the smart contract based on the negotiation result after the data negotiation request is authorized; or the data pricing model may be determined through other means, for example, the data owner has indicated the data pricing model to be adopted on the server. If a data requester still initiates a negotiation with the data owner, the data entity corresponding to the data requester is deemed to have agreed to the data pricing model by default.

In some embodiments, a supervisory entity may also be established to oversee various information recorded by the server. As an example only, when the server constitutes a blockchain, the supervisory entity may exist as a blockchain node. Since the data stored in the blockchain is tamper-proof, forgery-proof, and non-repudiable, regulatory authorities (such as government agencies or designated institutions) may access all current records of the blockchain through the supervisory entity. Additionally, based on regulatory needs, the regulatory authority may require any data entity to provide various operation records and/or private data through the client of the data entity via the supervisory entity, compare the existing records on the blockchain with the operation records and/or private data provided by the data entity to verify all data and/or operations, so as to achieve convenient, user-friendly, and credible supervision and auditing.

To facilitate understanding of the data sharing method applied to a client proposed in the embodiments of this application, the data sharing method is explained and described below through specific embodiments. Referring to FIG. 3, the data sharing method includes the following steps.

Step 301: Acquire private data of a data entity corresponding to the client regarding a target product.

The data entity may input the private data into the client after collecting the private data concerning the target product. The concepts of data entity, target product, and private data have been explained in other embodiments proposed earlier. Details are not described herein again.

It should be noted that, in practical application scenarios, the data entity might not possess the capability to collect private data. In such scenarios, the data entity may delegate the collection of private data regarding the target product to another third party with data collection capabilities, and input the private data into the client. In other words, the private data of the data entity regarding the target product does not necessarily need to be collected by the data entity.

Step 302: Perform data upload to a server based on the private data.

The client may periodically perform upload processing based on the private data obtained in the latest cycle; or the client may perform upload processing based on the currently unuploaded private data after the data entity inputs an upload instruction, with no limitation provided herein on the upload timing. The purpose of the upload processing is to enable the server to acquire and share the data features of the private data. The data features have been explained in other embodiments proposed earlier. Details are not described herein again.

Understandably, since the data features constitute an identifiable objective summary of the private data and can be used for uniquely representing the private data, the sharing operation performed by the server after the client conducts the upload processing enables each other data entity to gain a preliminary general understanding of the private data.

In some embodiments, since the computational power of the server generally surpasses that of the client, and the server constitutes a reliable third party, Step 302 may specifically manifest as: uploading the private data to the server. In other words, after the client obtains the private data, the client may directly upload the private data to the server, and the server generates and shares the data features of the private data. This approach can reduce the processing burden on the client.

In some embodiments, considering that the server may establish communication connections with multiple clients, in scenarios with a large number of clients, concurrent data uploads might affect the processing efficiency of the server despite the strong computational power of the server. Moreover, although the server constitutes a reliable third party, for data security considerations, the data entity might still prefer storing the private data locally to minimize the possibility of data leakage to the greatest extent, so Step 302 may specifically manifest as: generating data features based on the private data; and uploading the data features to the server. In other words, after the client obtains the private data, the client first generates the data features based on the private data locally, then uploads only the data features to the server, so that the private data remains unknown to the server. This approach can alleviate the processing burden on the server during concurrent data uploads from multiple clients while ensuring the data privacy and security of each data entity.

In some embodiments, different data entities might take effect at different stages of the lifecycle of the target product, leading to potentially different data expressions for the same data object by these data entities, specifically manifested as different data units or magnitudes. For example, regarding voltage description, some data entities might use volts as the unit, while others might use millivolts. This discrepancy might cause misunderstandings among data entities regarding the private data of other data entities, affecting subsequent data exchange and collaboration among data entities. Based on this, in the embodiments of this application, when the client generates the data features, the client may consider introducing an operation of data standardization, where the step of generating data features based on the private data may specifically be as follows.

E1: Acquire data feature standard information of the server.

After establishing a communication connection with the server, the client may first obtain the data feature standard information predefined by the server. The data feature standard information has been explained in other embodiments proposed earlier. Details are not described herein again.

E2: Generate data features of the private data of the target product based on the data feature standard information.

The client may generate the data features of the private data of the target product based on the data feature standard information. Understandably, the data features constitute an identifiable objective summary of the corresponding private data, and can be used for uniquely representing the private data.

In some embodiments, Step 302 may specifically include the following steps.

F1: Perform standardized processing on the private data based on the data feature standard information to obtain standardized data.

The client may perform standardized processing on the private data based on the obtained data feature standard information, to obtain standardized data. Understandably, the standardized data inevitably conforms to the data standards indicated by the data feature standard information.

In some examples, the server may develop a standardized interface based on the preset data feature standard information. In this way, the client may directly invoke the standardized interface to process the private data to obtain standardized data, which can improve the efficiency of standardized processing by the client to a certain extent.

F2: Generate the data features based on the standardized data.

After obtaining the standardized data, the client may generate the data features based on the standardized data rather than directly based on the private data; in other words, after generating the data features, the client proceeds with subsequent processing based on the standardized data.

Understandably, through data standardization processing, different expressions of the same data object by each data entity are unified, which can reduce cases of misunderstandings among data entities regarding the private data of other data entities, thereby promoting data exchange and collaboration among data entities to a certain extent.

In some embodiments, the private data generated by a data entity regarding the target product might include invalid and/or redundant data. This might arise due to anomalies in the target product or anomalies during data collection. Such invalid and/or redundant data affects the quality and value of the private data while also impacting the efficiency of data processing. Based on this, in the embodiments of this application, when the client generates the data features, an operation of data cleaning may be introduced before performing the data standardization operation (that is, before Step F1), and is specifically: performing data cleaning processing on the private data to obtain cleaned data.

As an example only, the data cleaning processing includes, but is not limited to, filling (or removing) blank data, removing obviously anomalous data, and removing duplicate data, with no limitation provided herein.

Correspondingly, the data standardization operation performed by the client may be optimized as: performing standardized processing on the cleaned data based on the data feature standard information to obtain standardized data. In other words, after the cleaned data is obtained, the object of standardized processing by the client shifts from the originally obtained private data to the cleaned data. Evidently, the data volume of the cleaned data is inevitably no greater than that of the originally obtained private data, which can improve the efficiency of standardized processing to a certain extent. Moreover, the resulting standardized data inevitably contains no invalid and/or redundant information, thereby improving data quality and value.

In some embodiments, to facilitate subsequent data exchange and collaboration among data entities, the data features of the private data may include a data description of the private data, where the data description may specifically be generated by the client through the following steps: generating the data description based on a preset data description format and the private data obtained by the client.

The data description has been explained in other embodiments proposed earlier. Details are not described herein again. Considering that the types of information included in the data description obtained based on different data entities might vary, the server may predefine a unified data description format and distribute the unified data description format to each client. In this way, the data description generated by each client conforms to the same data description format, which facilitates unified processing by the server and also makes it convenient for each data entity to access. Certainly, after the client performs standardized processing on the private data to obtain standardized data, the client may also generate the data description based on the data description format and the standardized data. Details are not described herein again.

In some embodiments, to conveniently verify the integrity and reliability of the private data and prevent data entities from privately tampering with the private data during data sharing through the server, the data features of the private data may include a summary of the private data, where the summary may specifically be generated by the client through the following steps: generating the summary based on a preset summary algorithm and the private data obtained by the client.

The summary has been explained in other embodiments proposed earlier. Details are not described herein again. The summary algorithm adopted by the client may be predefined by the server, so that the summary algorithms used by all clients remain consistent, avoiding data confusion due to different clients adopting different summary algorithms. As an example only, the summary algorithm may be secure hash algorithm, message digest algorithm, or variants of any of the above algorithms. The embodiments of this application do not limit thereto. Certainly, after the client performs standardized processing on the private data to obtain standardized data, the client may also generate the summary based on the summary algorithm and the standardized data. Details are not described herein again.

In some embodiments, after the server obtains the data features of the private data from the client, the server may share the data features by sharing the virtual dataset. During this process, if another data entity is interested in the private data possessed by the client, another client (that is, the client corresponding to the another data entity) may initiate a data negotiation request to the server for the private data, and the server forwards the data negotiation request. Alternatively, if the another client has already obtained the communication address of the client, the another client may also directly send a data negotiation request to the client. For distinction, in the embodiments of this application, the data negotiation request is denoted as a first data negotiation request, and the private data requested by the data negotiation request is denoted as a first target private data. Understandably, in this case, the client assumes the role of the data owner, the another client assumes the role of the data requester, and the client, as the data owner, may perform the following operations.

G1: Receive a first data negotiation request from a data requester to acquire the first target private data.

The data owner may receive the first data negotiation request and parse the first data negotiation request. Since the first data negotiation request may include, but is not limited to, one or more of the following information: requested data, the purpose of the data, computations expected to be carried out based on the data, and a data pricing model. In this way, by parsing the first data negotiation request, the data owner may ascertain the request purpose of the data requester and display the request purpose for the data entity corresponding to the data owner to understand.

G2: Generate, based on the first target private data if a confirmation instruction input by the data entity is received, a first authorization instruction used to trigger data interaction.

The data entity corresponding to the data owner may determine whether to agree to the first data negotiation request based on the actual situation of the data entity itself. If the data entity agrees, the data entity may input a confirmation instruction, enabling the data owner to generate an authorization instruction for the first data negotiation request based on the confirmation instruction. For distinction, in the embodiments of this application, the authorization instruction is denoted as the first authorization instruction.

G3: Send the first authorization instruction to the data requester.

Based on the manner of receiving the first data negotiation request, the data owner may determine the sending manner of the first authorization instruction and send the first authorization instruction to the data requester. Understandably, if the data requester sends the first data negotiation instruction to the data owner through the server, the data owner may similarly send the first authorization instruction to the data requester through the server. If the data requester sends the first data negotiation instruction directly to the data owner, the data owner may similarly send the first authorization instruction directly to the data requester. After both the data owner and the data requester are prepared, the data owner and the data requester may establish a data interaction link so as to implement data interaction based on the first target private data.

In some embodiments, since the server may establish communication connections with multiple clients, the server may actually store the data features of private data from multiple clients. Based on this, any data entity can access the server through the corresponding client to access the data features already stored by the server. Understandably, in this case, the client assumes the role of a data access party, and the client, as the data access party, may perform the following operations.

H1: Send a data access request to the server.

The data access party may send a data access request to the server upon receiving an access instruction input by the data entity. The data access request is configured to request the server to share all data features already stored by the server, that is, share the virtual dataset. The virtual dataset has been explained in other embodiments proposed earlier, and it includes data features of private data concerning the target product from multiple data entities. Details are not described herein again.

H2: Receive a virtual dataset sent by the server, including data features of different private data of the target product.

Upon receiving the data access request initiated by the data access party, the server may confirm that the data access party has a need to access the virtual dataset, to be specific, determining the necessity to share the virtual dataset with the data access party. The server may thus accurately send the virtual dataset to the data access party based on the sending address of the data access request, so that the data access party can display the virtual dataset on the display interface of the data access party for the data entity corresponding to the data access party to access the virtual dataset.

In some embodiments, after Step H2, the data entity may access the virtual dataset through the client, and gain knowledge of the data features of the private data possessed by other data entities, thereby forming a preliminary understanding of the private data possessed by other data entities. If the data entity determines, based on the virtual dataset, that certain private data possessed by other data entities is needed by the data entity, the data entity may initiate a data negotiation request through the client to corresponding another client to request the private data. Details of the information carried by the data negotiation are not described herein again. For distinction, in the embodiments of this application, the data negotiation request is denoted as a second data negotiation request, and the private data requested by the second data negotiation request is denoted as a second target private data. Understandably, in the embodiments of this application, the client assumes the role of the data requester, the another client assumes the role of the data owner, and the client may perform the following operations.

I1: Send a second data negotiation request to the data owner in response to an interaction instruction input by the data entity.

The interaction instruction of the data entity expresses the need of the data entity corresponding to the data requester for the second target private data. Upon receiving the interaction instruction of the data entity, the data requester may send the second data negotiation request to the data owner in response to the interaction instruction. Specifically, the data requester may send the second data negotiation request to the server, and then the server forwards the second data negotiation request to the data owner; or if the communication address of the data owner is known, the data requester may alternatively directly send the second data negotiation request to the data owner.

12: Interact with the data owner regarding the second target private data if a second authorization instruction sent by the data owner is received.

The data entity corresponding to the data owner may determine whether to agree to the second data negotiation request based on the actual situation of the data entity. If the data entity agrees, the data entity may input a confirmation instruction, and thus the data owner generates an authorization instruction for the second data negotiation request based on the confirmation instruction and sends the authorization instruction to the data requester. Details are not described herein again. For distinction, in the embodiments of this application, the authorization instruction is denoted as the second authorization instruction.

Upon receiving the second authorization instruction, the data requester may confirm that the data owner has agreed to perform data interaction with the data requester. After both the data requester and the data owner are prepared, the data requester and the data owner may establish a data interaction link so as to implement data interaction based on the second target private data.

It should be noted that, in practical application scenarios, the client may perform data interaction with one or more other clients simultaneously. In other words, when the client serves as the data requester, the second data negotiation instruction initiated by the client may designate multiple other clients as data owners simultaneously; similarly, when the client serves as the data owner, the client may respond to first data negotiation requests initiated by multiple other clients serving as data requesters simultaneously. In other words, the embodiments of this application do not limit the number of parties in data interaction.

In some embodiments, whether the client serves as the data requester or the data owner, data interaction between the client and any another client can be implemented based on privacy computing technology, and the type of privacy computing technology may specifically be determined through negotiation between the client and the another client, that is, determined through negotiation between the data entity corresponding to the client and the data entity corresponding to the another client. The number of any other clients may be one or more, and may be determined by the specific data needs of the client, with no limitation provided by this application. Through privacy computing technology, multi-party data can be efficiently utilized for integrated computation under the premise of compliance and ensuring data security and privacy of all parties. Understandably, the data interaction may be directly transmitting the private data (or directly transmitting standardized data), may be transmitting encrypted private data (or transmitting encrypted standardized data), or may be transmitting computation results obtained based on the private data and a given data computation algorithm (or transmitting computation results obtained based on standardized data and a given data computation algorithm), and may be specifically determined by the type of privacy computing technology negotiated, with no limitation provided herein.

As an example only, the types of privacy computing technologies adoptable by the client include secure multi-party computation (Secure multi-party computation, MPC), federated learning (Federated learning, FL), trusted execution environment (Trusted execution environment, TEE), homomorphic encryption (Homomorphic encryption, HE), and differential privacy (Differential privacy, DP). The embodiments of this application do not limit thereto.

In some embodiments, to enable the server to oversee the entire process of data exchange and collaboration between clients, during the data interaction process between clients, each client may generate interaction information based on each executed data interaction operation and upload the interaction information to the server. Since the server constitutes a reliable third party, the interaction information cannot be tampered with, repudiated, or forged. If disputes arise among interaction parties subsequently, the disputes can be resolved by accessing various interaction information from the interaction process stored by the server. Additionally, after the interaction concludes, the server may ascertain the actual usage volume of the interacted data based on various interaction information uploaded by clients during the interaction process, and perform accurate value settlement based on this information.

To facilitate understanding of the data sharing method applied to the server, the data sharing method applied to the client, and the data sharing system constituted by the server and the client proposed in the embodiments of this application, a brief overview of the full data sharing process is provided below, using the target product being a battery applied to vehicles as an example.

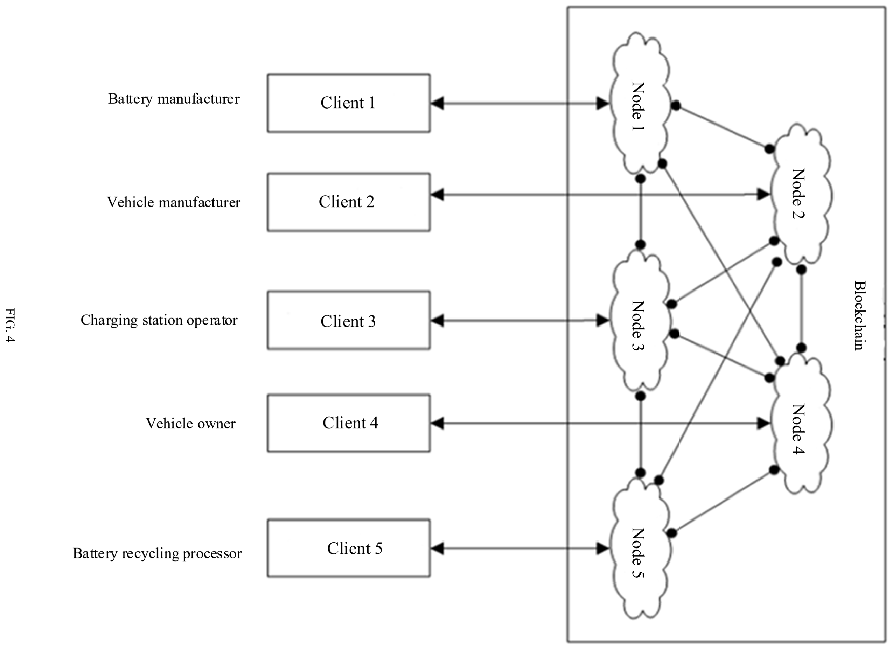

Referring to FIG. 4, FIG. 4 provides an example of the data sharing system. The data entities shown in FIG. 4 include a battery manufacturer, a vehicle manufacturer, a charging station operator, a vehicle owner, and a battery recycling processor.

Understandably, although FIG. 4 shows only one type of data entities, in practical applications, there may be multiple types of data entities, such as multiple battery manufacturers, multiple vehicle manufacturers, and so on. Moreover, the types of data entities are not limited to those shown in FIG. 4. In practical applications, there may also be research teams from universities studying batteries and insurance service providers, among various other data entities related to batteries. Details are not described herein again.

Each data entity may correspond to one client, and the client may upload the data features of the private data obtained by the corresponding data entity regarding the battery to a corresponding blockchain node. For example, client 1 may upload the data features of private data obtained by a battery manufacturer regarding the battery to node 1, client 2 may upload the data features of private data obtained by a vehicle manufacturer regarding the battery to node 2, and so on. Details are not described herein again.

All nodes in the blockchain may mutually transmit the data features of each piece of private data received, so as to achieve an aggregation of the data features of the private data obtained by each data entity regarding the battery. When encompassing data entities from all stages of the full lifecycle of the battery, the blockchain may ultimately obtain a virtual dataset covering the full lifecycle of the battery.

Each data entity may thus access the blockchain through the respective client and access the virtual dataset, gain knowledge of the data features of the private data of other data entities, and thus determine data desired for use by the data entity itself (that is, the data to be interacted with) and a data entity corresponding to the data owner of the data (that is, another data entity legally owning the data). Subsequently, the data entity may negotiate with the another data entity regarding the data to be interacted with through the client of the data entity, and perform data interaction after negotiation is complete. After the data interaction concludes, value settlement may be performed through the blockchain, enabling the data entity providing the data to gain certain benefits, which contributes to stimulate the enthusiasm of each data entity to provide higher-quality data. It should be noted that the number of interaction participants is not limited, and data interaction may be implemented based on privacy computing technology negotiated by the interaction parties.

For example, a research team from a university studying batteries has a research topic on battery state prediction models. The research team hopes to obtain rich training samples through multiple data sources, and through the data sharing system, the research team may collaborate with multiple data entities, achieve multidimensional optimization of the battery state prediction model based on the private data of multiple data entities, and obtain a battery state prediction model with better performance, higher accuracy, and greater robustness. In other words, based on the virtual dataset covering the full lifecycle, multiple data entities can achieve value sharing through data exchange and collaboration, enabling favorable development for all data entities. For example, battery manufacturers can improve battery production processes and optimize battery designs, vehicle manufacturers can achieve lower accident rates, vehicle owners can experience increased range and extended battery life in electric vehicles, insurance companies can reduce accident claim rates and increasing revenue, universities and research institutions can provide better algorithms and achieve industrial transformation, and so on.

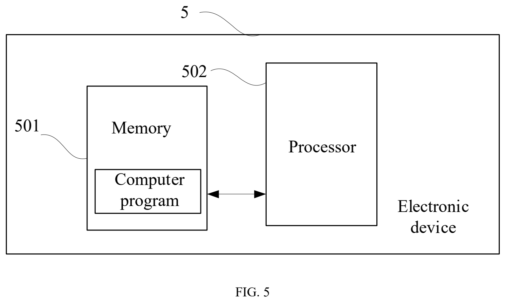

Corresponding to the data sharing method provided above, the embodiments of this application further provide an electronic device. Referring to FIG. 5, the electronic device 5 in the embodiments of this application includes a memory 501, one or more processors 502 (only one shown in FIG. 5), and a computer program stored in the memory 501 and executable on the processor. The memory 501 is configured to store software programs and units, and the processor 502 executes various functional applications and data processing by running the software programs and units stored in the memory 501 to acquire resources corresponding to the preset event.

When the electronic device constitutes a server, the processor 502, by executing the computer program stored in the memory 501, can implement the steps of the data sharing method applied to the server as described earlier. Details are not described herein again.

When the electronic device constitutes a client, the processor 502, by executing the computer program stored in the memory 501, can implement the steps of the data sharing method applied to the client as described earlier. Details are not described herein again.

Understandably, in the embodiments of this application, the processor 502 may be a central processing unit (Central Processing Unit, CPU), or the processor may be other general-purpose processors, digital signal processors (Digital Signal Processor, DSP), application-specific integrated circuits (Application Specific Integrated Circuit, ASIC), field-programmable gate arrays (Field-Programmable Gate Array, FPGA), or other programmable logic devices, discrete gate or transistor logic devices, discrete hardware components, and so on. A general-purpose processor may be a microprocessor, or the processor may be any conventional processor.

The memory 501 may include read-only memory and random access memory, and provide instructions and data to the processor 502. A portion or all of the memory 501 may further include non-volatile random access memory. For example, the memory 501 may also store information about device types.

In the foregoing embodiments, the descriptions of each embodiment have their respective emphases, and parts not detailed or recorded in a certain embodiment can refer to the relevant descriptions of other embodiments.

Those of ordinary skill in the art can realize that the algorithmic steps of each example described in connection with the embodiments disclosed herein can be implemented with electronic hardware or a combination of external device software and electronic hardware. Whether these functions are executed in hardware or software depends on the specific application and design constraints of the technical solution. Skilled technicians may use different methods to implement the described functions for each specific application, but such implementations should not be considered beyond the scope of this application.

In the embodiments provided in this application, the disclosed system and method can be implemented in other ways.

When the integrated unit is implemented in the form of a software functional unit and sold or used as a separate product, the integrated unit may be stored in a computer readable storage medium. Based on this understanding, all or part of the processes of the method in the embodiments of this application may be implemented by a computer program instructing related hardware. The computer program may be stored in the computer-readable storage medium, and when the computer program is executed by a processor, the steps in the foregoing method embodiments may be implemented. The computer program includes computer program code, where the computer program code may be source code, object code, an executable file, some intermediate forms, or the like. The computer-readable medium may include: any entity or apparatus capable of carrying the computer program code, a recording medium, a USB flash disk, a mobile hard disk, a diskette, a compact disc, a computer memory, a read-only memory (ROM, Read-Only Memory), a random access memory (RAM, Random Access Memory), electrical carrier signal, telecommunication signal, software distribution medium, and the like. It should be noted that the content included in the computer-readable storage medium can be appropriately increased or decreased based on the requirements of legislation and patent practice in the jurisdiction. For example, in certain jurisdictions, according to legislation and patent practice, the computer-readable storage medium does not include electrical carrier signals and telecommunication signals.

The foregoing embodiments are merely used to illustrate the technical solution of this application, not to limit the technical solution. Although this application has been described in detail with reference to the foregoing embodiments, those of ordinary skill in the art should understand that modifications can still be made to the technical solutions recorded in the foregoing embodiments, or equivalent replacements can be made to some technical features thereof. These modifications or replacements do not cause the essence of the corresponding technical solutions to depart from the spirit and scope of the technical solutions of the embodiments of this application and should be included within the protection scope of this application.

## Claims

1. A data sharing method applied to a server, **characterized in that** the data sharing method comprises:
acquiring data features of private data from at least one data entity within the lifecycle of a target product;
integrating the data features into a virtual dataset based on an association relationship between the data entity and the data features; and
sharing the virtual dataset.

2. The data sharing method according to claim 1, **characterized in that** the acquiring data features of private data from at least one data entity within a lifecycle of a target product comprises:
receiving the private data from the at least one data entity within the lifecycle of the target product; and
generating the data features based on the private data.

3. The data sharing method according to claim 2, **characterized in that** the generating the data features based on the private data comprises:
performing standardized processing on the private data based on preset data feature standard information to obtain standardized data; and
generating the data features based on the standardized data.

4. The data sharing method according to claim 3, **characterized in that** before the performing standardized processing on the private data based on preset data feature standard information to obtain standardized data, the data sharing method further comprises:
performing data cleaning processing on the private data to obtain cleaned data; and
correspondingly, the performing standardized processing on the private data based on preset data feature standard information to obtain standardized data comprises:
performing standardized processing on the cleaned data based on the data feature standard information to obtain the standardized data.

5. The data sharing method according to claim 1, **characterized in that** the acquiring data features of private data from at least one data entity within a lifecycle of a target product comprises:
receiving the data features of the private data from the at least one data entity within the lifecycle of the target product.

6. The data sharing method according to any one of claims 1 to 5, **characterized in that** the data features comprise a summary and/or a data description of the private data.

7. The data sharing method according to claim 1, **characterized in that** the sharing the virtual dataset comprises:
receiving a data access request sent by a data access party; and
sending the virtual dataset to the data access party based on the data access request.

8. The data sharing method according to any one of claims 1 to 7, **characterized in that** the data sharing method further comprises:
receiving a data negotiation request from a data requester to acquire target private data;
determining a data owner of the target private data; and
sending the data negotiation request to the data owner.

9. The data sharing method according to claim 8, **characterized in that** the data sharing method further comprises:
sending an authorization instruction to the data requester upon receiving the authorization instruction from the data owner.

10. The data sharing method according to claim 9, **characterized in that** after the receiving the authorization instruction from the data owner, the data sharing method further comprises:
acquiring interaction information between the data owner and the data requester; and
writing the interaction information into a smart contract configured for value settlement between the data owner and the data requester.

11. The data sharing method according to claim 9, **characterized in that** after the receiving the authorization instruction from the data owner, the data sharing method further comprises:
determining negotiation result information between the data owner and the data requester based on the data negotiation request and the authorization instruction; and
writing the negotiation result information into a smart contract configured for value settlement between the data owner and the data requester.

12. A data sharing method applied to a client, **characterized in that** the data sharing method comprises:
acquiring private data of a data entity corresponding to the client regarding a target product; and
performing data upload to a server based on the private data.

13. The data sharing method according to claim 12, **characterized in that** the performing data upload to a server based on the private data comprises:
uploading the private data to the server.

14. The data sharing method according to claim 12, **characterized in that** the performing data upload to a server based on the private data comprises:
generating data features based on the private data; and
uploading the data features to the server.

15. The data sharing method according to claim 14, **characterized in that** the generating data features based on the private data comprises:
acquiring data feature standard information of the server; and
generating the data features of the private data based on the data feature standard information.

16. The data sharing method according to claim 15, **characterized in that** the generating the data features of the private data based on the data feature standard information comprises:
performing standardized processing on the private data based on the data feature standard information to obtain standardized data; and
generating the data features based on the standardized data.

17. The data sharing method according to claim 16, **characterized in that** before the performing standardized processing on the private data based on the data feature standard information to obtain standardized data, the data sharing method further comprises:
performing data cleaning processing on the private data to obtain cleaned data; and
correspondingly, the performing standardized processing on the private data based on the data feature standard information to obtain standardized data comprises:
performing standardized processing on the cleaned data based on the data feature standard information to obtain the standardized data.

18. The data sharing method according to claim 16 or 17, **characterized in that** the data features comprise a data description of the private data; and the generating the data features based on the standardized data comprises:
generating the data description based on a preset data description format and the standardized data.

19. The data sharing method according to claim 16 or 17, **characterized in that** the data features comprise a summary of the private data; and the generating the data features based on the standardized data comprises:
generating the summary based on a preset summary algorithm and the standardized data.

20. The data sharing method according to any one of claims 12 to 19, **characterized in that** the data sharing method further comprises:
receiving a first data negotiation request from a data requester to acquire first target private data;
generating, based on the first target private data if a confirmation instruction input by the data entity is received, a first authorization instruction used to trigger data interaction; and
sending the first authorization instruction to the data requester.

21. The data sharing method according to any one of claims 12 to 19, **characterized in that** the data sharing method further comprises:
sending a data access request to the server; and
receiving a virtual dataset, sent by the server, comprising data features of different private data of the target product.

22. The data sharing method according to claim 21, **characterized in that** after the receiving a virtual dataset, sent by the server, comprising data features of different private data of the target product, the data sharing method further comprises:
determining second target private data based on the virtual dataset in response to the interaction instruction input by the data subject;
sending a second data negotiation request to a data owner of the second target private data; and
interacting with the data owner regarding the second target private data if a second authorization instruction sent by the data owner is received.

23. The data sharing method according to claim 20 or 22, **characterized in that** the data interaction is implemented based on a privacy computing technology, and the privacy computing technology is determined through negotiation by parties involved in the data interaction.

24. The data sharing method according to claim 20 or 22, **characterized in that** the data sharing method further comprises:
during the process of the data interaction, generating interaction information based on each executed data interaction operation; and
uploading the interaction information to the server.

25. A data sharing system, **characterized in that** the data sharing system comprises a server and a client; wherein the server is configured to implement the data sharing method according to any one of claims 1 to 11; and/or the client is configured to implement the data sharing method according to any one of claims 12 to 24.

26. An electronic device, **characterized by** comprising a memory, a processor, and a computer program stored in the memory and executable on the processor, wherein the processor, when executing the computer program, implements the steps of the data sharing method according to any one of claims 1 to 11; or the processor, when executing the computer program, implements the steps of the data sharing method according to any one of claims 12 to 24.

27. A computer-readable storage medium, **characterized in that** the computer-readable storage medium stores a computer program, wherein the computer program, when executed by a processor, implements the steps of the data sharing method according to any one of claims 1 to 24.
